# EUROPÄISCHE PATENTSCHRIFT

(11) **EP 2 077 148 B1**
(45) Veröffentlichungstag und Bekanntmachung des Hinweises auf die Patenterteilung: **12.03.2014**
(21) Anmeldenummer: 08019469.9
(22) Anmeldetag: 07.11.2008
(51) Int. Cl.: B01J 8/08, F26B 3/084, B01J 8/28, B01J 8/18, B01J 8/12

(54) **Verfahren und Vorrichtung zur mehrstufigen Behandlung von dispersen Feststoffen**
Method and device for multi-level treatment of dispersed solids
Procédé et dispositif destinés au traitement en plusieurs étapes de matières solides dispersées

(30) Priorität: 19.12.2007 DE 102007061136
(43) Veröffentlichungstag der Anmeldung: 08.07.2009
(73) Patentinhaber: Glatt Ingenieurtechnik GmbH, 99427 Weimar (DE)
(72) Erfinder: Rümpler, Karlheinz Dr., 99425 Weimar (DE); Jacob, Michael, 99427 Weimar (DE); Ohlendorf, Frank, 99198 Kerspleben (DE); Wand, Bernhard, 99510 Apolda (DE); Böber, Reinhard, 99425 Weimar (DE)
(74) Vertreter: Börjes-Pestalozza, Heinrich

(56) Entgegenhaltungen:
- EP-A- 0 014 488
- EP-A- 0 181 626
- EP-A- 0 206 340
- US-A- 4 601 113

## Beschreibung

Die Erfindung betrifft ein Verfahren zur mehrstufigen Behandlung von dispersen Feststoffen mit den im Oberbegriff des Patentanspruches 1 genannten Merkmalen und eine dazugehörige Vorrichtung mit den im Oberbegriff des Patentanspruches 11 genannten Merkmalen.

Aus der DD 237 762 A3 ist eine Behandlung von organischen Schüttgütern in einer mehrstufigen Wirbelschichtanlage bekannt. Die Vorrichtung besteht aus einem rechteckigen Reaktor mit mehreren übereinander angeordneten Behandlungsstufen. Die als Wirbelschicht ausgebildeten Behandlungsstufen weisen jeweils einen gasdurchlässigen Anströmboden auf, der von unten nach oben durch ein Fluidisierungsgas zum Aufbau einer Wirbelschicht in den einzelnen Behandlungsstufen durchströmt wird. Das zu behandelnde Material wird über einen Schüttguteintrag der obersten Behandlungsstufe zugeführt. Der Transport des zu behandelnden Feststoffes zwischen den einzelnen übereinander angeordneten Behandlungsstufen erfolgt durch Schwerkraft über kombinierte Austrags-Eintrags-Schächte und innerhalb einer Behandlungsstufe von der Eintragsseite zur gegenüberliegenden Seite. Nach Durchlaufen der Behandlungsstufen wird das behandelte Material mittels eines an der Behandlungsstufe angeordneten Austragsschachtes aus dem Reaktor ausgetragen.

Die thermische Behandlung des Materials inden Behandlungsstufen erfolgt durch eine direkte (d.h. direkter Kontakt zwischen Heiz- oder Kühlmedium und zu heizendem oder zu kühlendem Material) und indirekte (d.h. kein direkter Kontakt zwischen Heiz- oder Kühlmedium und zu heizendem oder zu kühlendem Material, nur durch z.B. Wärmeleitung durch Wandungen, wie Rohrwandungen) Wärmeübertragung. Dabei wird der einer Behandlungsstufe indirekt zugeführte Heißgasstrom der darüber liegenden Behandlungsstufe unterhalb des Anströmbodens als direkter Heißgasstrom zugeführt. Ein Teil des direkt der Behandlungsstufe zugeführten Gasstromes wird zur indirekten Gaszuführung einer darunter liegenden Behandlungsstufe genutzt. In den Behandlungsstufen erfolgt eine thermische Behandlung des Materials wie Trocknung und Entgasung.

Nachteilig ist eine aufwendige und komplizierte Verfahrensführung, die sich auch in einer aufwendigen und schwer zu beherrschenden Anlage widerspiegelt.

Ein weiterer Nachteil besteht darin, dass eine Behandlung von schwer zu behandelnden dispersen Feststoffen (siehe unten für Beispiele) in den einzelnen Behandlungsstufen nur bedingt möglich ist. Insbesondere ist es schwierig, in den einzelnen Behandlungsstufen eine Entfernung von Fremdstoffen aus dem zu behandelnden Material vorzunehmen, um jeweils gewünschte Materialeigenschaften zu erhalten.

Mehrstufig übereinander angeordnete nach dem Wirbelschichtprinzip betriebene Behandlungsstufen zur thermischen Behandlung von feinkörnigen Materialien, bei denen das zu behandelnde Material die einzelnen Stufen von oben nach unten durchläuft, sind beispielsweise auch aus der DE 973 557 C und DD 62 249 A bekannt.

US 4,601,113 beschreibt eine Vorrichtung und ein Verfahren zum Trocknen von Kohle in einer Mehrzahl von fluidisierten Betten mittels überhitztem Wasserdampf mit aufwändiger Konstruktion. EP 0 014 488 nennt die Verwendung eines Verdampfers, der Prozessdampf erzeugt.

Aufgabe der Erfindung ist es, ein Verfahren und eine Vorrichtung zur mehrstufigen Behandlung von dispersen Feststoffen unter Vermeidung der Nachteile des Standes der Technik zu schaffen, mit dem/der bei einem geringen Aufwand (auch schwer behandelbare) disperse Feststoffe so behandelt werden können, dass sie die gewünschten Materialeigenschaften bei einer weitgehend energieeffizienten und umweltfreundlichen Behandlung erreichen.

Diese Aufgabe wird gemäß der Erfindung verfahrensgemäß mit den Maßnahmen nach Anspruch 1 und vorrichtungsgemäß mit den Maßnahmen nach Anspruch 11 gelöst. Vorteilhafte Ausgestaltungen der Erfindung sind in den Unteransprüchen angegeben, die hier durch Bezugnahme aufgenommen werden.

Das erfindungsgemäße Verfahren zur mehrstufigen Behandlung von dispersen Feststoffen, bei dem der zu behandelnde Feststoff nacheinander mehrere als Fluidisierungs-(insbesondere Wirbelschicht-) Stufen ausgebildete Behandlungsstufen durchläuft und durch direkte und indirekte Wärmeübertragung einer thermischen Behandlung unterzogen wird, ist dadurch gekennzeichnet, dass die indirekte Wärmeübertragung durch ein im geschlossenen Wärmetauschkreislauf geführtes Medium erfolgt, das dabei vom Austrag des Feststoffes aus dem Apparat bis zum Eintrag des zu behandelnden Feststoffes in den Apparat durch zwei oder vorzugsweise mehr, beispielsweise 3 bis 6, einzelne Behandlungsstufen geführt und nach Verlassen des Apparats durch indirekten Wärmeaustausch gekühlt wird, im Gegenstrom zum dispersen Feststoff, und durch die weiteren Merkmale des Anspruchs 1.

Die erfindungsgemäße Vorrichtung zeichnet sich dadurch aus, dass die Rohrleitungen in Verbindung mit den Rohrleitungsanordnungen zur indirekten Wärmeübertragung als ein indirekter Wärmetauschkreislauf ausgebildet sind, bei dem die Rohrleitungsanordnungen über zwei oder vorzugsweise mehr, z.B. 3 bis 6, der mehrstufig übereinander angeordneten Anströmböden des (folglich mit mehreren übereinanderliegenden Behandlungsstufen ausgestatteten) (Fluidisierungs, insbesondere Wirbelschicht-)Apparates geführt werden und dass im indirekten Wärmetauschkreislauf zwischen dessen Austritt aus dem Apparat und dessen Eintritt in den Apparat wenigstens ein indirekter Wärmetauscher angeordnet ist, und durch die weiteren Merkmale des Anspruchs 11.

Der Vorteil der erfindungsgemäßen Lösung besteht darin, dass durch die mehrfach gekoppelten Stoff- und Wärmeströme und eine Anwendung von direkter und indirekter Wärmeübertragung in einem einzigen Apparat die thermische Behandlung von schwer zu behandelnden dispersen Feststoffen durchgeführt und jeweils gut an die zu behandelnden dispersen Feststoffe angepasst werden kann. Durch die Mehrstufigkeit wird in einem erfindungsgemäßen Apparat eine thermische Reaktion der zu behandelnden Feststoffe und deren Abkühlung durchgeführt. Dadurch ist es möglich, dass für die durchzuführenden thermischen Prozesse nur eine einzige Wärmequelle benötigt wird. Der Prozess ist einfach zu führen, da keine zusätzlichen Wärmeein- und -auskopplungen notwendig sind. Ein energiegünstiger Verfahrensablauf bei Reduzierung der Abgasmenge ist gegeben.

Ein weiterer Vorteil besteht darin, dass mit dem Verfahren und der dazugehörigen Vorrichtung in den einzelnen Behandlungsstufen eine Trocknung, (gleichzeitig oder anschließend) eine Aufheizung, dann eine Durchführung einer chemischen und thermischen Reaktion mit Entfernung schädlicher Inhaltsstoffe und schließlich eine Abkühlung der dispersen Feststoffe erfolgt und somit ein reines verkaufsfähiges Endprodukt direkt ohne weitere Nachbehandlung herstellbar ist. Es besteht auch die Möglichkeit, während des Kühlprozesses weitere Prozesse der Produktbehandlung, wie zum Beispiel Coating oder eine Agglomeration der Feststoffe, durchzuführen.

Durch die Komplexität der durchzuführenden einzelnen Behandlungsmaßnahmen ist die erfindungsgemäße Lösung insbesondere zur Reinigung von Gießereisanden, von Salzen oder zur Säuberung von Katalysatoren, welche jeweils Beispiele für schwer zu behandelnde disperse Feststoffe sind, einsetzbar.

Die erfindungsgemäße Lösung eignet sich insbesondere zur Behandlung von derartigen schwer behandelbaren dispersen anorganischen Feststoffen. Eine Einschränkung des erfindungsgemäßen Gedankens ist aber damit nicht gegeben. Schwer behandelbare disperse Feststoffe können z. B. Stoffe sein, die erst nach Entfernung von Fremdstoffen ihre gewünschten Eigenschaften - z. B. Feuchte, Fließfähigkeit, Kristallwasser, Solvatstruktur, Mineralstruktur, Reinheit, Farbe, Geruch, Kornspektrum, Oberflächenbeschaffenheit, Abriebfestigkeit, Sphärizität, Festigkeit, Elastizität oder Plastizität, Katalysatorfunktion, Inertcharakter - erhalten.

Die zu entfernenden Fremdstoffe sind dabei insbesondere ein oder mehrere ausgewählt aus der nachfolgenden Gruppe:
- Feuchtigkeit (Wasser, beliebige andere flüssig an oder in den Partikeln vorliegende brennbare und nicht brennbare, verdampfbare Stoffe )
- organischen, also brennbaren Feststoffverschmutzungen
- anorganischen, thermisch umwandelbaren Feststoffverschmutzungen
- volatilen Feststoffverschmutzungen (z. B. adsorbierten Gasen oder Flüssigkeiten)
- klebrigen Anhaftungen.

Wo von Fluidisierung die Rede ist, bedeutet dies insbesondere Fluidisierung in Form einer Strahlschicht, vorzugsweise eines Fließbetts oder ganz besonders einer Wirbelschicht.

Für bevorzugte Ausführungsformen können bevorzugte Begriffe, beispielsweise aus den Ansprüchen oder auch aus dem nachfolgenden Beispiel, einzeln, zu mehreren oder alle anstelle von allgemeineren Begriffen oder zusätzliche Merkmale (einzeln oder zu mehreren) aus dem Beispiel eingesetzt werden, was zu weiteren bevorzugten Ausführungsformen des erfindungsgemäßen Verfahrens und der erfindungsgemäßen Vorrichtung führt.

Die Erfindung wird nachfolgend an Ausführungsbeispielen näher erläutert, ohne dass dies ihren Umfang einschränkt.

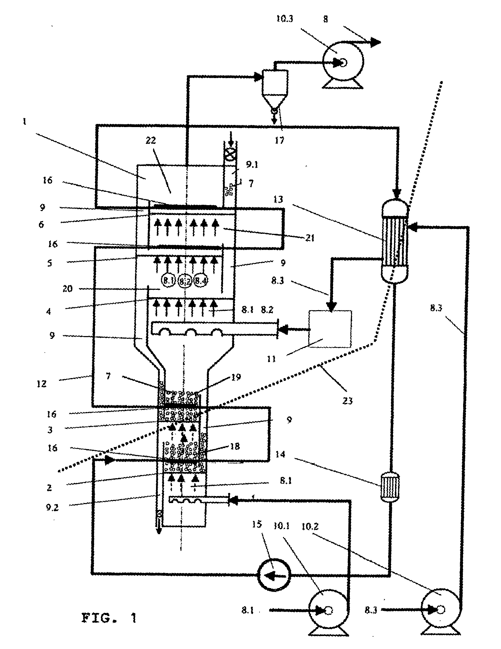

In der Zeichnung (Fig. 1) ist schematisch eine erfindungsgemäße Vorrichtung zur Durchführung des Verfahrens dargestellt. Oberhalb oder links der darin gezeigten gestrichelten geknickten Linie 23 liegt das Füllmedium im indirekten Wärmekreislauf 12 im heißeren, darunter oder rechts davon im kühleren Zustand vor.

Die Vorrichtung zur mehrstufigen Behandlung von (nur teilweise als kleine Kreise angedeuteten) dispersen Feststoffen 7 im Beispiel besteht aus einem vertikal angeordneten mehrstufigen Apparat 1 mit mindestens fünf mit Höhenabstand zueinander angeordneten, vorzugsweise horizontalen bis leicht geneigten perforierten Anströmböden 2, 3, 4, 5 und 6 (wobei die Zahl der Anströmböden auch anders sein kann, beispielsweise drei bis zehn Anströmböden)) Durch die Durchtrittsöffnungen der Anströmböden 2, 3, 4, 5 und 6 strömt ein von unten nach oben geführtes Fluidisierungsgas, wobei oberhalb der Anströmböden 2, 3, 4, 5 und 6 eine Fluidisierung in Form einer Wirbelschicht (sehr bevorzugt), einer Strahlschicht oder eines Fließbett (bevorzugt) ausgebildet wird. Den Anströmböden 2, 3, 4, 5 und 6 zugeordnet sind jeweils kombinierte Austrags-Eintrags-Schächte 9, durch die der disperse Feststoff 7 jeweils auf den nächst niederen Anströmboden strömt. Durch diese Feststoffströmung oder durch besondere Einbauten wird verhindert, dass das Fluidisationsgas durch die jeweiligen Flächen der Austrags-Eintrags-Schächte 9 nach oben gelangen kann. Die Zuführung des zu behandelnden Feststoffs 7 in den Apparat 1 erfolgt über einen oberhalb des (oberen) Anströmbodens 6 einmündenden Einlaufschacht 9.1, während der Austrag des fertig behandelten Endprodukts über einen an dem (unteren) Anströmboden 2 angeordneten Austragsschacht 9.2 erfolgt. Der Transport des zu behandelnden Feststoffes 7 zwischen den einzelnen übereinander angeordneten Behandlungsstufen erfolgt durch Schwerkraft über kombinierte Austrags-Eintrags-Schächte 9 und innerhalb einer Behandlungsstufe von der Eintragsseite zur gegenüberliegenden Seite.

Das in dem Apparat 1 benötigte Fluidisierungsgas, mit dem auch eine direkte Wärmeübertragung auf den zu behandelnden Feststoff 7 erfolgt, wird durch die druck- und saugseitig angeordneten Ventilatoren 10.1, 10.2 und 10.3 (auch als Pumpen bezeichenbar) in und durch die Apparatur 1 geleitet und verlässt als Abgas 8 den Apparat 1 - bevorzugte Details folgen im nächsten Absatz. In einem Staubabscheider 17 kann das Abgas 8 von den mitgeführten Staubanteilen gereinigt werden.

Über den Ventilator 10.1 wird ein Fluidisierungsgas 8.1 unterhalb des Anströmbodens 2 der untersten Behandlungsstufe des Apparats 1 zugeführt, das nacheinander die einzelnen Anströmböden 2, 3, 4, 5 und 6 zum Aufbau einer Fluidisierungsschicht, insbesondere einer Wirbelschicht, in den einzelnen Behandlungsstufen 18, 19, 20, 21, 22 und zum direkten Wärmeaustausch mit dem in den Behandlungsstufen 18, 19, 20, 21, 22 befindlichen Feststoff 7 durchströmt.

Zwischen den Anströmböden 3 und 4 wird dem Apparat 1 zusätzlich (beispielsweise mittels eines Ventilators 10.2) ein Heißgasstrom 8.2 zur thermischen Behandlung der Feststoffe 7 in den darüberliegenden Behandlungsstufen (hier z.B. 20, 21, 22) zugeführt. Der Heißgasstrom 8.2 wird in einer Brennkammer 11 (was auch andere Heizvorrichtungen nicht ausschließt) erzeugt, der über den Ventilator 10.2 ein (aufzuheizender) Gasstrom 8.3 zugeführt wird. Vor Eintritt des Gasstromes 8.3 in die Brennkammer 11 wird dieser zum indirekten Wärmetausch einem später beschriebenen Wärmetauscher 13 zugeführt.

Der Apparat 1 ist weiterhin mit einem geschlossenen indirekten Wärmetauschkreislauf 12 versehen, der aus zwei Wärmetauschern 13 (mindestens dieser ist vorzusehen),14, einer Pumpe 15 und Rohrleitungsanordnungen 16, z.B. in Form von Rohrbündeln und/oder Rohrschlangen, die über den unteren beiden Anströmböden 2 und 3 und den oberen beiden Anströmböden 5 und 6 angeordnet sind, besteht. Der indirekte Wärmetauschkreislauf 12 wird durch ein fluides Medium (vorzugsweise ein "Fluidum", beispielsweise Thermoöl), (hier im bevorzugten Gegenstrom zum Nettostrom der Teilchen des dispersen Feststoffes 7) durchströmt.

Die Behandlungsstufe 20, hier in einer bevorzugten Position oberhalb des Anströmbodens 4 gezeigt, dient zur Durchführung einer Verbrennungs-/chemischen Reaktion des zu behandelnden Feststoffes 7, also als Reaktionsraum. Angepasst an die geeigneten Verhältnisse für die zu behandelnden Feststoffe 7 erfolgt in dieser Behandlungsstufe 20 eine Verbrennung unerwünschter Feststoffe, die Desorption und Verbrennung adsorbierter gasförmiger oder flüssiger Stoffe, die Trocknung, Verdampfung und Verbrennung von Oberflächen- und Kristallfeuchten und/oder die Umwandlung von Stoffen. Die Behandlungsstufen 21 und 22 oberhalb der Anströmböden 6 und 5 dienen im vorliegenden Beispiel zur Aufwärmung und Trocknung der Feststoffe 7, doch können auch nur eine oder mehr als zwei solche Behandlungsstufen vorgesehen sein. In den Behandlungsstufen 18 und 19 oberhalb der Anströmböden 3 und 2 erfolgt eine Kühlung des Feststoffes 7 bei einer entsprechenden Energierückgewinnung durch den indirekten Wärmetauschkreislauf 12, doch können auch nur eine oder mehr als zwei solche Behandlungsstufen vorgesehen sein. In einer der oder den beiden im Beispiel gezeigten unteren Behandlungsstufen 18 und 19 oberhalb der Anströmböden 3 und 2 kann auch zusätzlich ein Coating oder eine Agglomeration der Feststoffe 7 durchgeführt werden. Bei dem Coating des zu behandelnden Feststoffes, beispielsweise in der Behandlungsstufe 19 oberhalb des Anströmbodens 3, wird der Feststoff 7 mit einer entsprechenden Flüssigkeit besprüht. Die (dem Fachmann bezüglich möglicher Ausführungsvarianten geläufige) entsprechende Sprühvorrichtung ist in der Zeichnung nicht dargestellt.

Entsprechend den Bedingungen in den einzelnen Behandlungsstufen sind die oberen Behandlungsstufen 20, 21, 22 über den Anströmböden 4, 5 und 6 anders ausgebildet als die unteren Behandlungsstufen 18 und 19 über den Anströmböden 2 und 3. Die Behandlungsstufen unterscheiden sich dabei hinsichtlich der Größe der Gasdurchtrittsöffnungen in den Anströmböden, der Bodenabstände zwischen den einzelnen Anströmböden 2 bis 6, des Radius der Anströmböden und/oder der Gestaltung der Schächte 9 und deren Wehrhöhe in den einzelnen Stufen. Dadurch ist es möglich, dass in den einzelnen Behandlungsstufen mit unterschiedlichen Feststoffschichten und Feststoffverweilzeiten entsprechend den durchzuführenden Bedingungen zur Behandlung des jeweiligen Feststoffes 7 gearbeitet werden kann.

Das erfindungsgemäße Verfahren zeichnet sich dadurch aus, dass die Fluidisierung, Wärmeübertragung und die durchzuführenden chemischen und thermischen Reaktionen in den Behandlungsstufen 18, 19, 20, 21, 22 oberhalb der einzelnen Anströmböden 2 bis 6 mittels des geschlossenen Wärmetauschkreislaufs 12 so gekoppelt werden, dass auf minimalem Raum in einem Apparat 1 höchste Prozesseffektivität erreicht wird. Dabei wird ein kühles Fluidisierungsgas 8.1, mit beispielsweise Umgebungstemperatur, über einen drückenden Ventilator 10.1 unterhalb des Anströmbodens 2 in den Apparat 1 aufgegeben und durchströmt den Anströmboden 2 der untersten Behandlungsstufe 18. Das Fluidisierungs- und Reaktionsgas 8.1, das z.B. die Oxydationskomponente Sauerstoff und gewünschtenfalls die Inertkomponente Stickstoff beinhaltet, kühlt den fluidisierten heißen dispersen Feststoff 7 in der untersten Behandlungsstufe mit höchsten Wärmeübergangszahlen, wobei es selbst erwärmt wird. Der Feststoff 7 in der untersten Behandlungsstufe wird zusätzlich durch Wärmeabtransport über das Fluidum (z.B. Thermoöl) des indirekten Wärmekreislaufs 12 gekühlt, das in dieser Behandlungsstufe die oberhalb des Anströmbodens 2 angeordneten Rohrleitungsanordnungen 16 durchströmt. Dabei wird ebenfalls das Fluidum erwärmt.

In der Behandlungsstufe 19 oberhalb des Anströmbodens 3 erfolgen analog zu der unteren Behandlungsstufe 18 ein direkter Wärmeaustausch zwischen dem Fluidisierungsgas 8.1 und dem Feststoff 7 und ein indirekter Wärmeaustausch zwischen dem durch die Rohrleitungsanordnungen 16 geleiteten Fluidum und dem Feststoff 7.

Dem Apparat 1 wird zwischen dem Anströmboden 3 und 4 mittels der extern angeordneten Brennkammer 11 ein weiterer Fluidisierungsgas- und Heißgasstrom 8.2 mit sehr hoher Temperatur aber ohne Sauerstoff zugeführt. Der mit Verbrennungs- und Reaktionstemperatur zugeführte Heißgasstrom 8.2 wird mit dem bisherigen Fluidisierungs- und Reaktionsgas 8.1 in je nach Prozessnotwendigkeit (z.B. geeigneten Verhältnissen und Temperierungen) gemischt, wodurch der disperse Feststoff 7 in der Behandlungsstufe 20 oberhalb des Anströmbodens 4 die gewünschte thermische Behandlung erfährt. Durch die dabei vor sich gehende Verbrennung vorhandener unerwünschter Stoffe im dispersen Feststoff 7 entstehen zusätzliche Wärme und zusätzliche Gasmengen an Fluidisierungsgas 8.4, die nicht von außen zugeführt werden müssen.

Den Behandlungsstufen oberhalb der Anströmböden 5 und 6 werden gemischte, sehr heiße, abreagierte Fluidisierungsgase zugeführt, die aus dem in die unterste Behandlungsstufe zugeführten Fluidisierungsgas 8.1, dem aus der Brennkammer 11 zugeführten Heißgasstrom 8.2 und dem bei der Verbrennung/Reaktion entstandenen zusätzlichen Fluidisierungsgas 8.4 bestehen. In den beiden oberen Behandlungsstufen 21 und 22 erfolgt durch direkte Wärmeübertragung mittels der fluidisierenden Gase 8.1, 8.2 und 8.4 und indirekte Wärmeübertragung durch den indirekten Wärmekreislauf 12 eine Aufwärmung und Trocknung des zu behandelnden Feststoffes 7. Das abgekühlte Abgas 8 verlässt die Apparatur 1, während das durch den Wärmetausch ebenfalls abgekühlte Fluidum zur weiteren Abkühlung dem indirekten Wärmetauscher 13 zugeführt wird.

Dem Wärmetauscher 13 wird zum Wärmeaustausch ein über den Ventilator 10.2 geförderter Gasstrom 8.3 zugeführt und dort als Kühlmittel für das im indirekten Wärmetauschkreislauf 12 geförderte Fluidum (z.B. Thermoöl) verwendet. Der Gasstrom 8.3 wird dabei vorgewärmt und verbessert so die Qualität der Verbrennung in der Brennkammer 11.

Das gekühlte Fluidum kann mindestens einem weiteren Wärmetauscher 14 zur indirekten Kühlung zugeführt werden, bevor es wieder der untersten Behandlungsstufe zugeführt wird.

### Aufstellung der verwendeten Bezugszeichen

- 1: Apparat
- 2: Anströmboden
- 3: Anströmboden
- 4: Anströmboden
- 5: Anströmboden
- 6: Anströmboden
- 7: Feststoff
- 8: Abgas
- 8.1: Fluidisierungsgas
- 8.2: Heißgasstrom
- 8.3: Gasstrom
- 8.4: Fluidisierungsgas
- 9: Austrags-Eintrags-Schacht
- 9.1: Eintragsschacht
- 9.2: Austragsschacht
- 10.1: Ventilator
- 10.2: Ventilator
- 10.3: Ventilator
- 11: Brennkammer
- 12: indirekter Wärmetauschkreislauf
- 13: Wärmetauscher
- 14: Wärmetauscher
- 15: Pumpe
- 16: Rohrleitungsschlange
- 17: Staubabscheider
- 18 bis 22:: Behandlungsstufen (Kammerbereiche)
- 23: Linie zum Trennen zwischen kühlerem und wärmerem Bereich des Wärmetauschkreislaufs 12

## Patentansprüche

1. Verfahren zur mehrstufigen Behandlung von dispersen Feststoffen (7), bei dem
- der - zu behandelnde - Feststoff (7) zur thermischen Behandlung nacheinander mehrere Behandlungsstufen (18,19, 20, 21, 22) eines Apparates (1) durchläuft,
- der Feststoff (7) in den Behandlungsstufen (18, 19, 20, 21, 22) durch von unten nach oben strömende Gase fluidisiert wird,
- in den einzelnen Behandlungsstufen (18, 19, 20, 21, 22) eine thermische Behandlung des Feststoffes (7) durch eine direkte und eine indirekte Wärmeübertragung erfolgt,
- der Transport des Feststoffes (7) zwischen den einzelnen übereinander angeordneten Behandlungsstufen (18, 19, 20, 21, 22) durch Schwerkraft über kombinierte Austrags-Eintrags-Schächte (9) und innerhalb einer Behandlungsstufe von der Eintragsseite zur gegenüberliegenden Seite erfolgt,
**dadurch gekennzeichnet, dass**
die indirekte Wärmeübertragung durch ein in einem geschlossenen Wärmetauschkreislauf (12) geführtes Medium im Gegenstrom zum dispergierten Feststoff erfolgt, das dabei vom Austrag des Feststoffes (7) aus dem Apparat (1) bis zum Eintrag des zu behandelnden Feststoffes (7) in den Apparat (1) durch zwei oder mehr einzelne Behandlungsstufen (18, 19, 20, 21, 22) geführt und nach Verlassen des Apparats (1) durch indirekten Wärmeaustausch gekühlt wird, und dass einer zwischen der untersten Behandlungsstufe (18) und der obersten Behandlungsstufe (22) liegenden Behandlungsstufe (20) unterhalb eines Anströmbodens (4) ein Heißgasstrom (8.2) zugeführt wird.

2. Verfahren nach Anspruch 1,
**gekennzeichnet dadurch, dass**
der untersten Behandlungsstufe (18) zur Fluidisierung und Kühlung des darin befindlichen Feststoffes (7) kalte Fluidisierungsgase (8.1), vorzugsweise mit Umgebungstemperatur, zugeführt werden.

3. Verfahren nach Anspruch 1 oder 2,
**gekennzeichnet dadurch, dass**
der Heißgasstrom Verbrennungstemperatur hat.

4. Verfahren nach einem der Ansprüche 1 bis 3,
**gekennzeichnet dadurch, dass**
in der oberhalb des Anströmbodens (4) liegenden Behandlungsstufe (20) die thermische Behandlung der Feststoffe (7) nur durch direkte Wärmeübertragung erfolgt.

5. Verfahren nach einem der Ansprüche 1 bis 4,
**gekennzeichnet dadurch, dass**
zur Erzeugung des Heißgasstromes (8.2) einer Brennkammer (11) ein durch den geschlossenen Wärmetauschkreislauf (12) indirekt vorgewärmter Gasstrom (8.3) zugeführt wird.

6. Verfahren nach einem der Ansprüche 1 bis 5,
**gekennzeichnet dadurch, dass**
der indirekte Wärmeaustausch ausgehend von einem im geschlossenen Wärmekreislauf (12) geführten Thermoöl erfolgt.

7. Verfahren nach einem der Ansprüche 1 bis 6,
**gekennzeichnet dadurch, dass**
in den einzelnen Behandlungsstufen (18, 19, 20, 21, 22) des Apparates (1) jeweils je Stufe eine der Behandlungen ausgewählt aus einer Aufheizung, einer Trocknung, einer thermischen Umsetzung und einer Abkühlung des Feststoffes (7) erfolgt und insgesamt alle vier genannten Behandlungen, vorzugsweise in der genannten Reihenfolge, durchgeführt werden, wobei jede Behandlung in ein oder mehreren (je Behandlung vorzugsweise hintereinanderliegenden) der Behandlungsstufen (18,19,20,21,22) durchgeführt werden kann.

8. Verfahren nach einem der Ansprüche 1 bis 7,
**gekennzeichnet dadurch, dass**
die thermische Umsetzung des Feststoffes (7) in der Behandlungsstufe (20) durch
- Verbrennung unerwünschter fester Bestandteile,
- durch Desorption und Verbrennung adsorbierter gasförmiger oder flüssiger Stoffe,
- durch Trocknung, Verdampfung und Verbrennung von Oberflächen- und Kristallfeuchten,
- und/oder durch chemische Umwandlung von Stoffen erfolgt.

9. Verfahren nach einem der Ansprüche 1 bis 8, **dadurch gekennzeichnet, dass** die Zahl der Behandlungsstufen (18, 19, 20, 21, 22) bei drei bis zehn liegt.

10. Verfahren nach Anspruch 1, **dadurch gekennzeichnet, dass** in den einzelnen Behandlungsstufen eine Trocknung, gleichzeitig oder anschließend eine Aufheizung, dann eine Durchführung einer chemischen und thermischen Reaktion mit Entfernung schädlicher Inhaltsstoffe und schließlich eine Abkühlung der dispersen Feststoffe unter direkter Herstellung eines verkaufsfähigen Endproduktes erfolgt, wobei während des Kühlprozesses als weitere Prozesse der Produktbehandlung Coating oder eine Agglomeration der Feststoffe durchgeführt werden können.

11. Vorrichtung zur mehrstufigen Behandlung von dispersen Feststoffen bestehend aus
- einem vertikal angeordneten Apparat (1) mit mehreren übereinander angeordneten Anströmböden (2,3,4,5,6), bei denen die Anströmböden mit Durchtrittsöffnungen für ein von unten nach oben strömendes Fluidisierungsgas zur Ausbildung einer Fluidisierung über den Anströmböden versehen sind,
- einem oberhalb des obersten Anströmbodens (6) einmündenden Eintragsschacht (9.1) zum Eintrag der Feststoffe (7) in den Apparat (1),
- einem an dem untersten Anströmboden (2) angeordneten Austragsschacht zum Austrag des behandelten Feststoffes aus dem Apparat (1), und
- zwischen den einzelnen übereinander angeordneten Anströmböden (2,3,4,5,6) kombinierten Austrags-Eintrags-Schächte (9)
**dadurch gekennzeichnet, dass**
bei mehreren der Anströmböden (2,3,5,6) je mindestens eine dem jeweiligen Anströmboden zugeordnete, in oder über dem jeweiligen Anströmboden angeordnete Rohrleitungsanordnung (16) zur indirekten Wärmeübertragung zwischen den Feststoffen (7) und dem in den Rohrleitungsanordnungen und den diese verbindenden Rohrleitungen strömenden Medium vorgesehen ist,
die Rohrleitungen zusammen mit den Rohrleitungsanordnungen (16) zur indirekten Wärmeübertragung als ein indirekter Wärmetauschkreislauf (12) ausgebildet sind,
dass im Wärmetauschkreislauf (12) zwischen dessen Austritt aus dem Apparat (1) und dessen Eintritt in den Apparat (1) wenigstens ein indirekter Wärmetauscher (13; 14) angeordnet ist,
die Rohrleitungsanordnungen (16) des indirekten Wärmetauschkreislaufes (12) oberhalb der Anströmböden (2; 3; 5; und 6;) des Apparates (1) angeordnet sind und nicht oberhalb des Anströmbodens (4) einer Behandlungsstufe (20), unterhalb deren Anströmbodens (4) eine Zuführung zum Eintrag eines in einer Brennkammer (11) erzeugten Heißgasstromes (8.2) angeordnet ist,
dass sie so ausgelegt ist, dass die Führung des Mediums in dem indirekten Wärmekreislauf (12) im Gegenstrom zum von oben nach unten stattfindenden Strom des dispersen Feststoffes (7) vorgesehen ist,
dass der indirekte Wärmetauscher (13) über eine Rohrleitung mit der Brennkammer (11) zur Zuführung eines im Wärmetauscher (13) aufgeheizten Gasstromes (8.3) verbunden ist, und
dass sie drei bis zehn Anströmböden (2,3,4,5,6) und Behandlungszonen (18,19,20,21,22) aufweist.

12. Vorrichtung nach Anspruch 11, **dadurch gekennzeichnet, dass** drei oder weniger als drei Behandlungszonen als Behandlungsstufe/Reaktionsraum ausgestattet sind.

## Claims

1. Method for the multiple-stage treatment of dispersed solids (7), in which method
- the solid (7) to be treated passes through a plurality of treatment stages (18, 19, 20, 21, 22) of an apparatus (1) one after another for thermal treatment,
- the solid (7) is fluidized in the treatment stages (18, 19, 20, 21, 22) by gases which flow from the bottom to the top,
- a thermal treatment of the solid (7) takes place by way of a direct and an indirect thermal transfer in the individual treatment stages (18, 19, 20, 21, 22),
- the transport of the solid (7) between the individual treatment stages (18, 19, 20, 21, 22) which are arranged above one another takes place by way of gravity via combined outlet/inlet shafts (9) and within a treatment stage from the input side to the side which lies opposite,
**characterized in that**
the indirect thermal transfer is effected in counterflow with respect to the dispersed solid by way of a medium which is guided in a closed heat-exchange circuit (12), in the process is guided through two or more individual treatment stages (18, 19, 20, 21, 22) from the outlet of the solid (7) out of the apparatus (1) as far as the inlet of the solid (7) to be treated into the apparatus (1) and, after leaving the apparatus (1), is cooled by way of indirect heat exchange, and **in that** a hot gas flow (8.2) is fed to a treatment stage (20) below an inflow base (4), which treatment stage (20) lies between the lowermost treatment stage (18) and the uppermost treatment stage (22).

2. Method according to Claim 1, **characterized in that** cold fluidizing gases (8.1), preferably at ambient temperature, are fed to the lowermost treatment stage (18) for the fluidization and cooling of the solid (7) which is situated therein.

3. Method according to Claim 1 or 2, **characterized in that** the hot gas flow is at combustion temperature.

4. Method according to one of Claims 1 to 3, **characterized in that**, in the treatment stage (20) which lies above the inflow base (4), the thermal treatment of the solids (7) is effected only by direct thermal transfer.

5. Method according to one of Claims 1 to 4, **characterized in that** a gas flow (8.3) which is preheated indirectly by the closed heat-exchange circuit (12) is fed to a combustion chamber (11) in order to generate the hot gas flow (8.2).

6. Method according to one of Claims 1 to 5, **characterized in that** the indirect heat exchange takes place starting from a heat-transfer oil which is guided in the closed heat-exchange circuit (12).

7. Method according to one of Claims 1 to 6, **characterized in that** one of the treatments selected from heating, drying, thermal conversion and cooling of the solid (7) takes place in each case per stage in the individual treatment stages (18, 19, 20, 21, 22) of the apparatus (1), and a total of all four stated treatments are carried out, preferably in the stated sequence, it being possible for each treatment to be carried out in one or more of the treatment stages (18, 19, 20, 21, 22) (which preferably lie behind one another per treatment).

8. Method according to one of Claims 1 to 7, **characterized in that** the thermal conversion of the solid (7) takes place in the treatment stage (20) by way of
- combustion of undesired solid constituent parts,
- by way of desorption and combustion of adsorbed gaseous or liquid substances,
- by way of drying, evaporation and combustion of surface moisture and crystal moisture,
- and/or by way of chemical conversion of substances.

9. Method according to one of Claims 1 to 8, **characterized in that** the number of treatment stages (18, 19, 20, 21, 22) lies at from three to ten.

10. Method according to Claim 1, **characterized in that** drying, at the same time or subsequently heating, then carrying out of a chemical and thermal reaction with the removal of harmful ingredients and finally cooling of the dispersed solids with the direct production of a marketable end product take place in the individual treatment stages, it being possible for coating or an agglomeration of the solids to be carried out during the cooling process as further processes of product treatment.

11. Device for the multiple-stage treatment of dispersed solids comprising
- a vertically arranged apparatus (1) with a plurality of inflow bases (2, 3, 4, 5, 6) which are arranged above one another and in which the inflow bases are provided with passage openings for a fluidizing gas which flows from the bottom to the top in order to form a fluidization above the inflow bases,
- an inlet shaft (9.1) which opens above the uppermost inflow base (6) in order to introduce the solids (7) into the apparatus (1),
- an outlet shaft which is arranged at the lowermost inflow base (2) in order to discharge the treated solid from the apparatus (1), and
- combined outlet/inlet shafts (9) between the individual inf low bases (2, 3, 4, 5, 6) which are arranged above one another,
**characterized in that**,
in a plurality of inflow bases (2, 3, 5, 6), in each case at least one pipeline arrangement (16) which is assigned to the respective inflow base and is arranged in or above the respective inflow base is provided for the indirect heat exchange between the solids (7) and the medium which flows in the pipeline arrangements and the pipelines which connect them,
the pipelines are configured together with the pipeline arrangements (16) as an indirect heat-exchange circuit (12) for the indirect thermal transfer,
**in that** at least one indirect heat exchanger (13; 14) is arranged in the heat-exchange circuit (12) between its outlet out of the apparatus (1) and its inlet into the apparatus (1),
the pipeline arrangements (16) of the indirect heat-exchange circuit (12) are arranged above the inflow bases (2; 3; 5; and 6) of the apparatus (1) and not above the inflow base (4) of a treatment stage (20), below the inflow base (4) of which a feed for introducing a hot gas flow (8.2) which is produced in a combustion chamber (11) is arranged,
**in that** it is designed in such a way that the routing of the medium in the indirect heat circuit (12) is provided in counterflow with respect to the flow of the dispersed solid (7), which flow takes place from the top to the bottom,
**in that** the indirect heat exchanger (13) is connected via a pipeline to the combustion chamber (11) for feeding in a gas flow (8.3) which is heated in the heat exchanger (13), and
**in that** it has from three to ten inflow bases (2, 3, 4, 5, 6) and treatment zones (18, 19, 20, 21, 22).

12. Device according to Claim 11, **characterized in that** three or fewer than three treatment zones are equipped as treatment stage/reaction space.

## Revendications

1. Procédé destiné au traitement en plusieurs étapes de matières solides dispersées (7), dans lequel
- la matière solide (7) - à traiter - parcourt successivement plusieurs étages de traitement (18, 19, 20, 21, 22) d'un appareil (1), en vue du traitement thermique,
- ladite matière solide (7) est fluidisée dans lesdits étages de traitement (18, 19, 20, 21, 22), par des gaz en circulation de bas en haut,
- un traitement thermique de ladite matière solide (7) s'opère par des transferts de chaleur direct et indirect, dans les étages individuels de traitement (18, 19, 20, 21, 22),
- l'acheminement de ladite matière solide (7) a lieu par gravité entre lesdits étages individuels de traitement (18, 19, 20, 21, 22) agencés en superposition, par l'intermédiaire de puits combinés (9) de décharge-introduction, et depuis le côté introduction jusqu'au côté opposé à l'intérieur d'un étage de traitement,
**caractérisé par le fait que**
le transfert indirect de chaleur s'opère à contre-courant de la matière solide dispersée, sous l'action d'un fluide qui est guidé dans un circuit fermé (12) d'échange thermique et est alors guidé, à travers des étages individuels de traitement (18, 19, 20, 21, 22) au nombre de deux ou plus, depuis la décharge de la matière solide (7) hors de l'appareil (1) jusqu'à l'introduction, dans ledit appareil (1), de ladite matière solide (7) devant être traitée, puis est refroidi par échange thermique indirect après avoir quitté ledit appareil (1) ; et **par le fait qu'**un flux de gaz chauds (8.2) est délivré à un étage de traitement (20) interposé entre l'étage de traitement (18) inférieur extrême et l'étage de traitement (22) supérieur extrême, au-dessous d'un fond d'arrivée (4).

2. Procédé selon la revendication 1,
**caractérisé par le fait que**
des gaz froids de fluidisation (8.1), de préférence à température ambiante, sont délivrés à l'étage de traitement (18) inférieur extrême, en vue de la fluidisation et du refroidissement de la matière solide (7) renfermée par ce dernier.

3. Procédé selon la revendication 1 ou 2,
**caractérisé par le fait que**
le flux de gaz chauds présente une température de combustion.

4. Procédé selon l'une des revendications 1 à 3,
**caractérisé par le fait que**
le traitement thermique des matières solides (7) s'opère uniquement par transfert direct de chaleur dans l'étage de traitement (20) situé au-dessus du fond d'arrivée (4).

5. Procédé selon l'une des revendications 1 à 4,
**caractérisé par le fait**
**qu'**un flux gazeux (8.3), préchauffé en mode indirect par le circuit fermé (12) d'échange thermique, est délivré à une chambre de combustion (11) en vue d'engendrer le flux de gaz chauds (8.2).

6. Procédé selon l'une des revendications 1 à 5,
**caractérisé par le fait que**
l'échange thermique indirect s'opère sur la base d'une huile thermique guidée dans le circuit thermique fermé (12).

7. Procédé selon l'une des revendications 1 à 6,
**caractérisé par le fait que**
l'un des traitements, sélectionnés parmi un chauffage, un séchage, une conversion thermique et un refroidissement de la matière solide (7), a lieu dans les étages individuels de traitement (18, 19, 20, 21, 22) de l'appareil (1), à raison d'un étage respectif, et la totalité des quatre traitements susmentionnés est de préférence exécutée dans l'ordre de succession précité, sachant que chaque traitement peut être effectué dans un ou plusieurs desdits étages de traitement (18, 19, 20, 21, 22) (de préférence placés en succession pour chaque traitement).

8. Procédé selon l'une des revendications 1 à 7,
**caractérisé par le fait que**
la conversion thermique de la matière solide (7) a lieu, dans l'étage de traitement (20),
- par combustion de composants solides indésirables,
- par désorption et combustion de substances gazeuses ou liquides adsorbées,
- par séchage, vaporisation et combustion d'humidités de surface et d'humidités cristallines,
- et/ou par transformation chimique de substances.

9. Procédé selon l'une des revendications 1 à 8, **caractérisé par le fait que** le nombre des étages de traitement (18, 19, 20, 21, 22) est compris entre trois et dix.

10. Procédé selon la revendication 1, **caractérisé par le fait qu'**il s'opère, dans les étages individuels de traitement, un séchage, un chauffage simultané ou consécutif, puis l'exécution de réactions chimique et thermique avec élimination d'ingrédients nocifs et, pour finir, un refroidissement des matières solides dispersées, avec génération directe d'un produit final marchand, sachant qu'un revêtement ou une agglomération desdites matières solides peut avoir lieu, au cours du processus de refroidissement, en tant que processus supplémentaires du traitement dudit produit.

11. Dispositif dévolu au traitement en plusieurs étapes de matières solides dispersées, comprenant
- un appareil (1) installé verticalement et comportant plusieurs fonds d'arrivée (2, 3, 4, 5, 6) agencés en superposition, lesdits fonds d'arrivée étant percés d'orifice de passage dédiés à un gaz de fluidisation en circulation de bas en haut, en vue de produire une fluidisation au-dessus desdits fonds d'arrivée,
- un puits d'introduction (9.1) débouchant au-dessus du fond d'arrivée (6) supérieur extrême, afin d'introduire les matières solides (7) dans l'appareil (1),
- un puits de décharge placé au niveau du fond d'arrivée (2) inférieur extrême, afin de décharger la matière solide traitée hors dudit appareil (1), et
- des puits combinés (9) de décharge-introduction, interposés entre les fonds individuels d'arrivée (2, 3, 4, 5, 6) agencés en superposition,
**caractérisé par le fait**
**qu'**au moins un ensemble respectif (16) de conduits tubulaires est prévu sur plusieurs des fonds d'arrivée (2, 3, 4, 5, 6), est affecté au fond d'arrivée considéré et se trouve dans ledit fond d'arrivée considéré, ou au-dessus de celui-ci, en vue du transfert indirect de chaleur entre les matières solides (7) et le fluide en circulation dans les ensembles de conduits tubulaires et dans les canalisations tubulaires reliant ces derniers,
lesdites canalisations tubulaires étant réalisées sous la forme d'un circuit (12) d'échange thermique indirect en association avec lesdits ensembles (16) de conduits tubulaires, en vue du transfert indirect de chaleur ;
**qu'**au moins un échangeur thermique indirect (13 ; 14) est interposé, dans ledit circuit (12) d'échange thermique, entre la sortie de celui-ci hors de l'appareil (1) et son entrée dans ledit appareil (1),
les ensembles (16) de conduits tubulaires dudit circuit (12) d'échange thermique indirect étant placés au-dessus des fonds d'arrivée (2 ; 3 ; 5 ; et 6) de l'appareil (1), et non pas au-dessus du fond d'arrivée (4) d'un étage de traitement (20) au-dessous du fond d'arrivée (4) duquel une amenée est disposée en vue de l'introduction d'un flux de gaz chauds (8.2) engendré dans une chambre de combustion (11) ;
**qu'**il est agencé de façon telle que le guidage du fluide, dans le circuit thermique indirect (12), soit prévu à contre-courant du flux de la matière solide dispersée (7), s'opérant de haut en bas ;
**que** l'échangeur thermique indirect (13) est relié à ladite chambre de combustion (11) par l'intermédiaire d'une canalisation tubulaire, et vue de délivrer un flux gazeux (8.3) chauffé dans ledit échangeur thermique (13) ; et
**qu'**il compte de trois à dix fonds d'arrivée (2, 3, 4, 5, 6) et zones de traitement (18, 19, 20, 21, 22).

12. Dispositif selon la revendication 11, **caractérisé par le fait que** des zones de traitement, au nombre de trois ou en nombre inférieur à trois, sont conçues en tant qu'étage de traitement/espace de réaction.
